# EUROPEAN PATENT SPECIFICATION

(11) **EP 3 107 979 B1**
(45) Date of publication and mention of the grant of the patent: **28.03.2018**
(21) Application number: 15714666.3
(22) Date of filing: 02.02.2015
(51) Int. Cl.: C10G 1/02, C10B 11/00, C10B 19/00, C10B 53/07, C10G 1/10

(54) **METHOD AND PLANT FOR DISPOSING OF WASTES COMPOSED OF PLASTIC MATERIALS AND BIOMASSES**
VERFAHREN UND ANLAGE ZUR ENTSORGUNG VON ABFALLSTOFFEN AUS KUNSTSTOFFMATERIALIEN UND BIOMASSEN
PROCÉDÉ ET INSTALLATION POUR L'ÉLIMINATION DE DÉCHETS CONSTITUÉS DE MATIÈRES PLASTIQUES ET DE BIOMASSES

(30) Priority: 21.02.2014 IT TO20140145
(43) Date of publication of application: 28.12.2016
(73) Proprietor: Benzi, Giuseppe, 15050 Carbonara Scrivia (AL) (IT)
(72) Inventor: Benzi, Giuseppe, 15050 Carbonara Scrivia (AL) (IT)
(74) Representative: Garavelli, Paolo
(86) International application number: PCT/IT2015/000015
(87) International publication number: WO 2015/125166

(56) References cited:
- WO-A1-2010/128055
- WO-A1-2013/053380
- WO-A2-2008/023246
- US-A- 4 250 158
- US-A- 4 647 443

## Description

The present invention deals with a method and a plant for disposing of solid wastes, composed of plastic materials and biomasses, and liquid wastes, particularly composed of spend vegetal oils and greases.

Disposal of wastes is a big problem, since it is more and more difficult to find areas to be used as landfills, and burning to ashes has a high cost and, if not correctly performed, can give rise to environmental pollution.

Treatment plants have been devised, known as incinerators, which use plastic materials as fuel to produce heat, and also plants for treating the biomasses which, through fermenting, produce fuel gas.

The present invention proposes a new procedure for the disposal of plastic materials, of biomasses and of spent vegetal oils and greases, which allows obtaining fuel gas through a pyrolysis treatment.

The present invention therefore proposes a method, and a plant for performing said method, as claimed in the respective independent claims

The method essentially consists in subjecting the solid and liquid wastes to be disposed of to a pyrolysis treatment, which allows extracting the synthesis fuel gas (syngas), obtaining an inert residual which gives no problems for its disposal in a landfill.

The plant substantially comprises:
- a first section in which pyrolysis of waste materials is performed, and synthesis gas (syngas) and residual ashes are produced;
- a second section in which the lighter fraction of such ashes, namely the pulverized coal or carbon black which is transported by the syngas, is separated from the syngas;
- a third section in which the fractioned distillation of the pyrolysis products occurs, obtaining high-boiling hydrocarbons, namely a bituminous residual (*tar*);
- a fourth section in which the recycle of the bituminous residual of the fractioned distillation occurs, for a further treatment, said bituminous residual being able to be mixed with the liquid wastes.

The pyrolysis chamber is substantially composed of a tube made of a special alloy, heated and equipped with a mechanized system for the controlling handling and advancement of the solid mass to be subjected to the pyrolysis treatment. The tube is externally insulated with a ceramic fabric and, by means of a motor-reducer assembly, it is slowly turned around its own axis.

A feature of the plant is that it is energetically autonomous, since it uses part of the produced fuel gas to supply an endo-thermal motor which actuates an alternator, which provides the electric energy used for heating the pyrolysis chamber and for actuating all necessary devices for the operation of the plant.

The use of the method and of the plant of the invention definitely allows transforming solid and liquid + wastes into a fuel gas and into inert residuals. Part of the fuel gas is used to produce the necessary energy for the operation of the whole plant, while the inert residual fraction, whose volume is much lower than the starting mass of the wastes, can be disposed of in a landfill without particular problems, both for the reduced amount of said ashes, and because they are not polluting.

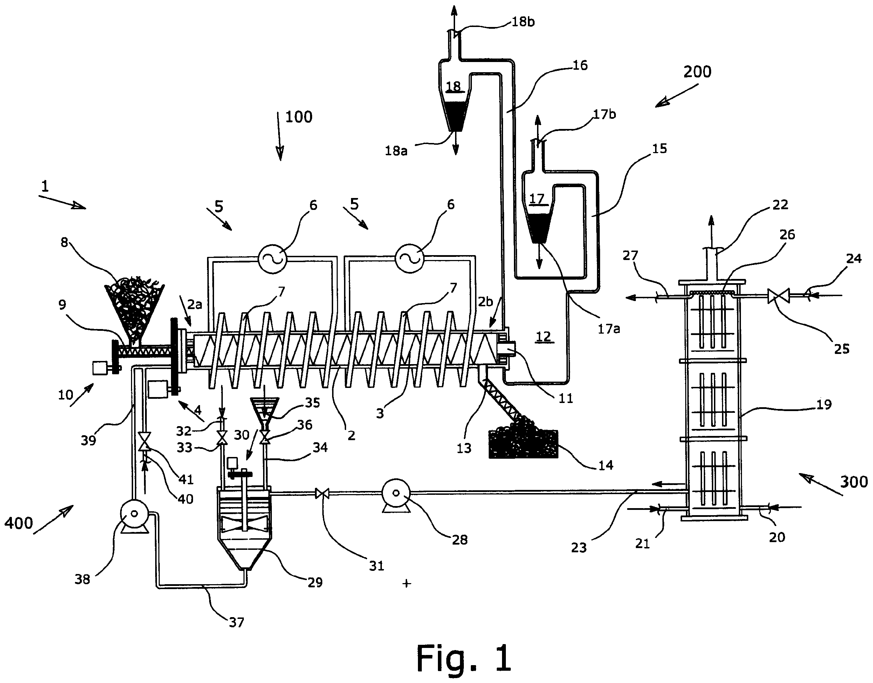

The invention will now be described, as a non-limiting example, according to a preferred embodiment and with reference to the enclosed Figure 1, which shows the functional diagram of the pyrolysis plant.

With reference to Figure 1, (1) designates a pyrolysis plant, according to the invention, heated with high-frequency currents. The pyrolysis plant (1) comprises:
- a first section (100), in cui pyrolysis of waste materials is performed, synthesis gas (syngas) is produced and residual ashes of the treatment are discharged;
- a second section (200), in which the lighter fraction of the ashes (pulverized coal or carbon black) which is transported by the syngas, is separated from the syngas;
- a third section (300), in which the fractioned distillation of the pyrolysis products is performed, obtaining high-boiling hydrocarbons or bituminous residuals (*tar*);
- a fourth section (400), in which the recycle of the bituminous residual of the fractioned distillation is performed, for a further treatment.

The first section (100) comprises a cylinder (2), or pyrolysis chamber, rotating around its own axis, externally equipped with insulation, for example in ceramic fiber. Wings shaped as an Archimedean screw (3), with tempered surface through nitriding, are welded in the cylinder (2).

The cylinder (2) is rotated by a first motor-reducer assembly (4) and is internally heated by heating means (5), in order to take the solid mass to be pyrolyzed to a temperature of 680÷750°C.

According to a preferred embodiment, the internal diameter of the pyrolysis chamber (2) will preferably range between 650 and 950 mm, while the length will preferably range between 6000 mm and 8000 mm, with a rotation at a speed for example between 1 and 3 revolutions per minute. Moreover, said heating means (5) comprise two induction generators (6) at a radiofrequency variable between 1.5 kHz and 2.5 kHz and with a power from 80 to 120 kW each, each one of which is connected to + a coil (7), inside which the pyrolysis cylinder (2) slowly rotates, The two coils transmit the high-frequency induced current created by the two generators, so that the cylinder (2) becomes seat of eddy currents which heat it due to Joule effect.

The temperature control is performed by means of two laser probes (not shown), placed at the inlet and at half the pyrolysis chamber (2). The two control points are composed, each, of three sequential detecting points.

Loading of the cylinder (2) occurs, at the first end (2a) of the cylinder (2), by means of a hopper (8) which supplies a scroll (9) rotated by a second motor-reducer assembly (10).

The material is loaded at the inlet of the pyrolysis chamber (2). If the waste to be treated is solid, it is first minced in pieces whose size is about 1 cm and loaded by means of the scroll (9) with compression ratio preferably from 1:150 to 1:250 and with adjustable speed. If instead the waste is liquid, it is loaded in the recycling section (400), as better specified below.

The material loaded in the hopper (8) and inserted with pressure by the scroll (9), reaches inside the cylinder (2) whose rotation, coupled to the Archimedean screw (3), pushes it towards the second end (2b) of the cylinder (2). +

In the path along the cylinder (2), at the temperature of 680÷750°C, the solid waste, mainly composed of plastic materials like polyethylene, polypropylene, ABS, PET, polystyrene, polyurethanes, or of biomass (wood, depuration muds, rice straw, etc.) is subjected to pyrolysis, producing solid and gaseous compounds. The gaseous fraction, called syngas, comprises a mixture of H₂, CO, CO₂ CH₄ (volatile fraction at ambient temperature) and drags high-boiling hydrocarbons, oxygenated products having various molecular weights as steam and pulverized coal of carbon (carbon black), while the solid fraction comprises extremely reduced amounts of residual ashes.

Through an opening (11), the syngas enters a settling chamber (12), while the residual ashes are discharged, through a duct (13), in a container (14).

The second section (200) comprises the settling chamber (12) from which the syngas is conveyed, through a first duct (15) and a second duct (16), towards a first cyclone (17) and, respectively, a second cyclone (18). Inside the cyclones (17) and (18), syngas is treated in order to complete the separation from the pulverized coal (carbon black) which it transported, the pulverized coal being discharged through a lower opening (17a, 18a) of said first and second cyclone (17, 18), while the syngas + thereby depurated from the carbon black is exited from the upper part (17b, 18b).

The third section (300), in which the fractionated separation of the pyrolysis products occurs, comprises a column of fractioned distillation (19) composed of various overlapped elements equipped with condensation plates and cooling serpentines with adjustment of the necessary amount of water to keep each module ta the condensation temperature of the mixtures of high-boiling elements which thereby abandon the syngas. All condensed high-boiling elements are conveyed onto the column bottom.

In the lower part of the column of fractioned distillation (19) syngas coming from separating cyclones (17) and (18) enters through the ducts (20) and (21). In the column (19), the volatile fraction of syngas is separated from the high-boiling hydrocarbons, which compose said bituminous residual (*tar*) and exit from the upper outlet (22), while said high-boiling hydrocarbons go out of the lower outlet (23). Syngas is conveyed towards a blower (not shown) which creates a slight under-pressure in the pyrolysis chamber (2) and sends the syngas towards basic and acid washing columns (not shown).

Through a duct (24), which enters the top part of + the column (19), cooling water is made pass, this inlet being controlled by a valve (25) and an electronic liter-counter (not shown). Water then crosses a serpentine (26) and exits, as overheated steam, from a duct (27).

In the fourth section (400), there is the recirculation of high-boiling hydrocarbons going out, through the duct (23), from the lower part of the fractioned distillation column (19), and of the coal powder (carbon black) extracted from the separating cyclones (17) and (18) placed at the outlet of the settling chamber (12).

The fourth section (400) comprises a pump (28) which inserts said high-boiling hydrocarbons in a turbo-mixer (29), actuated by a third motor-reducer assembly (30), the flow of said high-boiling hydrocarbons being regulated by a valve (31).

Carbon black coming from cyclones (17) and (18) is inserted in the turbo-mixer (29) though a duct (32), the flow of said carbon black being regulated by a valve (33).

Through a duct (34), liquid wastes too (spent vegetal oils and greases) are inserted in the turbo-mixer (29), said liquid wastes being inserted in a hopper (35) and their flow being regulated by a valve (36).

In the turbo-mixer (29) an emulsion is produced + which, going into a duct (37), reaches a pump (38) which inserts it into the pyrolysis chamber (2) through a duct (39). Through a duct (40), into the pyrolysis chamber (2) the overheated steam is inserted, which goes out of the fractioned distillation column (19) through the duct (27), the flow of steam being regulated by a valve (41).

The turbo-mixer (29) is able to thoroughly mix the carbon product going out of the separating cyclones and the extracted *tar* on the base of the fractioned distillation column (19). This mixing is re-inserted at the inlet of the pyrolysis chamber together with the overheated steam coming from the serpentines of the fractioned separation column. The amount of steam is variable between 10% and 15% in weight of the waste loaded at the pyrolyzer inlet. This variation is due to the nature of the treated waste. This mixing becomes very efficient with the addition of spent vegetal oil, inserted in the hopper (35), coming from a differentiated collection, since it has excellent properties for dissolving the hydrocarbons, also at high concentrations.

The percentage of oxygen present in the pyrolysis chamber is controlled and recorded continuously by an analytical instrument of the SYN 100 type, capable of also verifying the percentage of CO, CO₂, H₂ and CH₄ in the produced syngas. To prevent both syngas from going + out and oxygen from seeping in the pyrolysis chamber, the supply of the solid waste is performed with the scroll (9) with high compacting pressure and pre-heated at a suitable temperature (according to the type of waste) to allow the formation of a plug such as to guarantee the system seal to air, and therefore to oxygen, in the pyrolysis chamber (2). Between the loading hopper and the scroll, a star valve is inserted to avoid infiltrations of air, and therefore of oxygen obnoxious for the pyrolysis process.

The pyrolysis chamber (2) is kept at a slight under-pressure by the blower which sents the syngas towards the basic and acid washing columns, the under-pressure being equal to about 0.7 mbar less than the external pressure.

In case of emergency, the produced syngas, after washing, is started as emergency torch, the induction generators are turned off and the pyrolysis chamber is washed with nitrogen gas.

The invention has been described as a non-limiting example, according to a preferred embodiment. The skilled people in the art could find numerous variations, all falling within the scope of the enclosed claims.

## Claims

1. Pyrolysis plant for treating solid and liquid wastes, comprising:
• a first section (100), which performs a pyrolysis of said solid and liquid wastes, said pyrolysis producing synthesis gas and residual ashes, said first section (100) comprising a cylinder (2), or pyrolysis chamber, equipped with: an external insulation, means for loading the solid wastes placed at a first end (2a) of the pyrolysis cylinder (2), and heating means (5);
• a second section (200), which performs the separation of a lighter fraction of said ashes, such as pulverized coal or carbon black, from said syngas, said lighter fraction being transported by the syngas;
• a third section (300), which performs the fractioned distillation of said syngas, obtaining the separation of the volatile fraction of said syngas from a bituminous residual;
• a fourth section (400), which performs the recycle of the bituminous residual of said fractioned distillation, for a further treatment;
**characterized in that** said cylinder (2), or pyrolysis chamber, is able to rotate around its own axis and is equipped with:
• means which induce, by means of said rotation, an advancement of the material contained in said cylinder (2), said means comprising an Archimedean screw (3);
• said heating means (5), which comprise at least one radiofrequency induction generator (6), each one of said generators (6) being connected to a coil (7), inside which said pyrolysis cylinder (2) slowly rotates, said coil (7) transmitting the high-frequency induced current created by said at least one generator (6) so that the pyrolysis cylinder (2) becomes seat of eddy currents which heat it through Joule effect; and
• means for rotating said cylinder (2).

2. Pyrolysis plant according to claim 1, **characterized in that** said insulation is made of ceramic fiber.

3. Pyrolysis plant according to claim 1, **characterized in that** said means for loading the solid wastes, placed at the first end (2a) of the pyrolysis cylinder (2), comprise a scroll (9), supplied by a hopper (8) and rotated by a second motor-reducer assembly (10).

4. Pyrolysis plant according to claim 1, **characterized in that** said generators (6) produce currents having a frequency of 2.5 kHz and a power of 85 kW.

5. Pyrolysis plant according to claim 1, **characterized in that** said means for rotating said cylinder (2) comprise a first motor-reducer assembly (4).

6. Pyrolysis plant according to claim 1, **characterized in that** said means for loading the solid wastes comprise a hopper (8) which supplies a scroll (9) rotated by a second motor-reducer assembly (10).

7. Pyrolysis plant according to claim 6, **characterized in that** said scroll (9) supplies said solid waste with a compression ratio of about 1:200 and is pre-heated at a suitable temperature, according to the type of waste, to allow forming a plug adapted to prevent both syngas from going out, and oxygen from going in the pyrolysis chamber (2).

8. Pyrolysis plant according to claim 1, **characterized in that** said second section (200), adapted to perform the separation of the lighter fraction of said ashes, such as pulverized coal or carbon black, from said syngas, comprises a settling chamber (12) which collects the synthesis gas going out of said pyrolysis chamber (2), at least one duct (15, 16) being provided, adapted to convey said synthesis gas towards at least one cyclone (17, 18) inside which the syngas is treated in order to perform the separation from the pulverized coal or carbon black transported by said syngas, said pulverized coal being discharged through a lower opening (17a, 18a) of said at least one cyclone (17, 18), while the thereby cleaned syngas is made go out from the upper part (17b, 18b).

9. Pyrolysis plant according to claim 1, **characterized in that** said third section (300), adapted to perform the fractioned distillation of said syngas, comprises a column (19), in which there are:
• ducts (20) and (21), placed in the lower part of said column (19), through which enters the syngas coming from said separating cyclones (17) and (18);
• an outlet (22), placed in the top part of said column (19), from which the synthesis gas goes out after the separation from the bituminous residual, said synthesis gas being conveyed towards a blower adapted to create a slight under-pressure in the pyrolysis chamber and to send the synthesis gas towards the washing columns;
• an outlet (23), placed in the lower part of said column (19), from which said bituminous residual goes out.

10. Pyrolysis plant according to claim 9, **characterized in that** said fractioned distillation column (19) further comprises a duct (24), which enters in the top part of said column (19), in which cooling water is passed, said water crossing a serpentine (26) and going out, as overheated steam, from a duct (27).

11. Pyrolysis plant according to claim 1, **characterized in that** said fourth section (400), adapted to perform the recycle of the bituminous residual of said fractioned distillation, comprises:
• a turbo-mixer (29), actuated by a third motor-reducer assembly (30), in cui said bituminous residual is inserted;
• a duct (32), through which the carbon black coming from the cyclones (17) and (18) is inserted in the turbo-mixer (29);
• a duct (34), through which liquid wastes, such as spent oils and greases, inserted in the turbo-mixer (29); in the turbo-mixer (29) an emulsion being produced, which is inserted in the pyrolysis chamber (2).

12. Pyrolysis plant according to claim 11, **characterized in that** said fourth section (400), adapted to perform the recycle of the bituminous residual of said fractioned distillation, further comprises a duct (40) through which the overheated steam coming from the fractioned distillation column (19) is inserted in the pyrolysis chamber (2), through said duct (27).

13. Method for treating solid and liquid wastes, **characterized in that** it is performed through a plant according to any one of the previous claims, said method providing a pyrolysis treatment of said solid and liquid wastes, from which a synthesis gas and an inert residual are obtained, said method comprising the steps of subjected to fractioned distillation the pyrolysis products, and sending to a new pyrolysis cycle the bituminous residuals of said fractioned distillation, said solid wastes comprising plastic materials and biomasses and being loaded directly into the pyrolysis chamber (2) in which they are subjected to said pyrolysis treatment, said liquid wastes comprising spent oils and greases which are inserted in said pyrolysis chamber (2) after mixing with said bituminous residuals coming from the fractioned distillation of the pyrolysis products.

## Patentansprüche

1. Pyrolyseanlage für die Behandlung von festen und flüssigen Abfällen, die Folgendes enthält:
* einen ersten Abschnitt (100), der eine Pyrolyse der genannten festen und flüssigen Abfälle ausführt, die genannte Pyrolyse erzeugt Synthesegas und Restaschen, der genannte erste Abschnitt (100) enthält eine Pyrolysetrommel (2) oder Pyrolysekammer, die folgendermaßen ausgestattet ist: Außenisolierung, Lademittel der festen Abfälle, die an einem ersten Ende (2a) der Pyrolysetrommel (2) positioniert sind, und Heizmittel (5);
* einen zweiten Abschnitt (200), der die Trennung einer leichteren Fraktion der genannten Aschen wie Kohlenstaub oder Ruß vom Syngas ausführt, die genannte leichtere Fraktion wird vom Syngas transportiert;
* einen dritten Abschnitt (300), der die fraktionierte Destillation des genannten Syngases ausführt und die Trennung der flüchtigen Fraktion des genannten Syngases aus einem Bitumenrest erhält;
* einen vierten Abschnitt (400), der das Recycling des Bitumenrestes der genannten fraktionierten Destillation für eine weitere Behandlung ausführt;
und **dadurch gekennzeichnet ist, dass** sich die genannte Pyrolysetrommel (2) oder Pyrolysekammer um ihre eigene Achse drehen kann und folgendermaßen ausgestattet ist:
* Mittel, die durch die genannte Rotation einen Vorschub des in der genannten Trommel (2) enthaltenen Materials auslösen, die genannten Mittel enthalten eine Archimedesschraube (3);
* die genannten Heizmittel (5), die mindestens einen Hochfrequenzinduktionsgenerator (6) enthalten, jeder der genannten Generatoren (6) ist mit einer Spule (7) verbunden, in der sich die genannte Pyrolysetrommel (2) langsam dreht, die genannte Spule (7) überträgt den Hochfrequenzinduktionsstrom, der von mindestens einem Generator (6) erzeugt wird, sodass die Pyrolysetrommel (2) eine Aufnahme für Parasitenströme wird, die sie durch den Jouleeffekt erhitzen; und
* Mittel, um die genannte Trommel (2) in Rotation zu versetzen.

2. Pyrolyseanlage gemäß Patentanspruch 1, die **dadurch gekennzeichnet ist, dass** die genannte Isolierung aus Keramikfaser ist.

3. Pyrolyseanlage gemäß Patentanspruch 1, die **dadurch gekennzeichnet ist, dass** die genannten Lademittel der festen Abfälle, die am ersten Ende (2a) der Pyrolysetrommel (2) positioniert sind, eine Schnecke enthalten (9), die durch einen Trichter (8) versorgt und durch einen zweiten Getriebemotor (10) in Rotation versetzt wird.

4. Pyrolyseanlage gemäß Patentanspruch 1, die **dadurch gekennzeichnet ist, dass** die genannten Generatoren (6) Frequenzströme 2,5 kHz erzeugen und eine Leistung von 85 kW haben.

5. Pyrolyseanlage gemäß Patentanspruch 1, die **dadurch gekennzeichnet ist, dass** die genannten Mittel einen ersten Getriebemotor (4) enthalten, um die genannte Trommel (2) in Drehung zu versetzen.

6. Pyrolyseanlage gemäß Patentanspruch 1, die **dadurch gekennzeichnet ist, dass** die genannten Lademittel der festen Abfälle einen Trichter (8) enthalten, der eine Schnecke (9) versorgt, die durch einen zweiten Getriebemotor (10) in Rotation versetzt wird.

7. Pyrolyseanlage gemäß Patentanspruch 6, die **dadurch gekennzeichnet ist, dass** die genannte Schnecke (9) den genannten festen Abfall mit einem Druckverhältnis von etwa 1:200 zuführt und je nach der Art des Abfalls auf eine angemessene Temperatur erhitzt wird, um die Bildung eines Stopfens zu ermöglichen, der dazu dient, sowohl Austritte von Syngas als auch das Eindringen von Sauerstoff in die Pyrolysekammer (2) zu vermeiden.

8. Pyrolyseanlage gemäß Patentanspruch 1, die **dadurch gekennzeichnet ist, dass** der genannte zweite Abschnitt (200), der dazu dient, die Trennung der leichteren Fraktion der genannten Aschen wie Kohlenstaub und Ruß vom genannten Syngas auszuführen, eine Beruhigungskammer (12) enthält, in der das aus der genannten Pyrolysekammer (2) austretende Synthesegas gespeichert wird, es ist mindestens eine Leitung (15, 16) vorgesehen, die dazu dient, das genannte Synthesegas an mindestens einen Zyklon (17, 18) zu leiten, in dem das Syngas behandelt wird, sodass die Trennung vom Kohlenstaub und Ruß ausgeführt wird, der vom genannten Syngas transportiert wird, der genannte Staub wird durch eine untere Öffnung (17a, 18a) des genannten mindestens einen Zyklons (17, 18) entleert, während das so gereinigte Syngas aus dem oberen Teil (17b, 18b) entleert wird.

9. Pyrolyseanlage gemäß Patentanspruch 1, die **dadurch gekennzeichnet ist, dass** der genannte dritte Abschnitt (300), der dazu dient, die fraktionierte Destillation des genannten Syngases auszuführen, eine Säule (19) enthält, in der Folgendes vorgesehen ist:
• Leitungen (20) und (21), die im unteren Teil der genannten Säule (19) positioniert sind, durch die das Syngas eintritt, das aus den genannten Zyklonen (17) und (18) kommt;
einen Ausgang (22), der im oberen Teil der genannten Säule (19) positioniert ist, aus dem das Synthesegas nach der Trennung vom Bitumenrest austritt, das genannte Synthesegas wird durch ein Gebläse geleitet, das dazu dient, einen leichten Niederdruck in der Pyrolysekammer zu erzeugen und das Synthesegas an die Waschsäulen zu leiten;
• einen Ausgang (23), der im unteren Teil der genannten Säule (19) positioniert ist, aus der der genannte Bitumenrest austritt.

10. Pyrolyseanlage gemäß Patentanspruch 9, die **dadurch gekennzeichnet ist, dass** die genannte Säule der fraktionierten Destillation (19) außerdem eine Leitung (24) enthält, die in den oberen Teil der genannten Säule (19) eintritt, durch die das Kühlwasser geleitet wird, das genannte Wasser durchströmt einen Schieber (26) und tritt in Form von überhitztem Dampf aus einer Leitung (27) aus.

11. Pyrolyseanlage gemäß Patentanspruch 1, die **dadurch gekennzeichnet ist, dass** der genannte vierte Abschnitt (400), der dazu dient, das Recycling des Bitumenrestes der genannten fraktionierten Destillation auszuführen, Folgendes enthält:
• einen Turbomixer (29), der durch einen dritten Getriebemotor (30) angetrieben wird, in den der genannte Bitumenrest eingeführt wird;
• eine Leitung (32), durch die der von den Zyklonen (17) und (18) kommende Ruß in den Turbomixer (29) eingeführt wird;
• eine Leitung (34), durch die flüssige Abfälle wie Altpflanzenöle und -fette in den Turbomixer (29) eingeführt werden;
Im Turbomixer (29) wird eine Emulsion erzeugt, die in die Pyrolysekammer (2) eingeführt wird.

12. Pyrolyseanlage gemäß Patentanspruch 11, die **dadurch gekennzeichnet ist, dass** der genannte vierte Abschnitt (400), der dazu dient, das Recycling des Bitumenrestes der genannten fraktionierten Destillation auszuführen, außerdem eine Leitung (40) enthält, durch die der überhitzte Dampf in die Pyrolysekammer (2) eingeführt wird, der aus der Säule der fraktionierten Destillation (19) durch die genannte Leitung (27) kommt.

13. Methode für die Behandlung von festen und flüssigen Abfällen, die **dadurch gekennzeichnet ist, dass** sie gemäß einem der vorhergehenden Patentansprüche durch eine Anlage ausgeführt wird, die genannte Methode sieht eine Pyrolysebehandlung der genannten festen und flüssigen Abfälle vor, aus der Synthesegase und ein inerter Rest erhalten werden, die genannte Methode enthält die Phasen, die Pyrolyseprodukte einer fraktionierten Destillation zu unterstellen und die Bitumenreste der genannten fraktionierten Destillation in einen neuen Pyrolysezyklus zu leiten, die genannten festen Abfälle enthalten Kunststoffe und Biomassen und werden direkt in die Pyrolysekammer (2) gefüllt, in der sie der genannten Pyrolysebehandlung unterstellt werden, die genannten flüssigen Abfälle enthalten Altöle und -fette, die nach der Mischung mit den genannten Bitumenresten, welche aus der fraktionierten Destillation der Pyrolyseprodukte kommen, in die genannte Pyrolysekammer (2) eingeführt werden.

## Revendications

1. Système de pyrolyse pour le traitement de déchets solides et liquides comprenant :
* une première section (100) qui effectue une pyrolyse des déchets solides et liquides ; la pyrolyse produit des gaz de synthèse et des cendres résiduelles ; la première section (100) comprend un cylindre (2), ou chambre de pyrolyse, doté de : isolation externe, moyens de chargement des déchets solides positionnés à une première extrémité (2a) du cylindre de pyrolyse (2) et des moyens chauffants (5) ;
* une seconde section (200) qui sépare une fraction plus légère des cendres, telle que le charbon pulvérisé ou le noir de carbone, du syngas ; cette fraction plus légère étant transportée par le syngas ;
* une troisième section (300) qui effectue la distillation fractionnée du syngas en séparant la fraction volatile du syngas d'un résidu bitumineux ;
* une quatrième section (400) qui effectue le recyclage du résidu bitumineux de la distillation fractionnée pour un autre traitement ;
**caractérisé en ce que** le cylindre (2), ou chambre de pyrolyse, est en mesure de tourner autour de son axe et est doté de :
* moyens qui, à travers la rotation, provoquent l'avance du matériau contenu dans le cylindre (2) ; ces moyens comprennent une vis d'Archimède (3) ;
* moyens chauffants (5) qui comprennent au moins un générateur (6) à induction à radiofréquence, chaque générateur (6) est relié à une bobine (7) à l'intérieur de laquelle le cylindre de pyrolyse (2) tourne lentement ; la bobine (7) transmet le courant induit à haute fréquence créé par au moins un générateur (6) de sorte que le cylindre de pyrolyse (2) devienne le siège de courants de Foucault qui le réchauffent par effet Joule ; et
* moyens pour mettre en rotation le cylindre (2).

2. Système de pyrolyse, selon la revendication 1, **caractérisé en ce que** l'isolation est en fibre céramique.

3. Système de pyrolyse, selon la revendication 1, **caractérisé en ce que** les moyens de chargement des déchets solides, positionnés sur la première extrémité (2a) du cylindre de pyrolyse (2), comprennent une vis sans fin (9), alimentée par une trémie (8) qui est mise en rotation par un second groupe motoréducteur (10).

4. Système de pyrolyse, selon la revendication 1, **caractérisé en ce que** les générateurs (6) produisent des courants de fréquence 2,5 kHz et ont une puissance de 85 kW.

5. Système de pyrolyse, selon la revendication 1, **caractérisé en ce que** les moyens pour mettre en rotation le cylindre (2) comprennent un premier groupe motoréducteur (4).

6. Système de pyrolyse, selon la revendication 1, **caractérisé en ce que** les moyens de chargement des déchets solides comprennent une trémie (8) qui alimente une vis sans fin (9) qui est mise en rotation par un second groupe motoréducteur (10).

7. Système de pyrolyse, selon la revendication 6, **caractérisé en ce que** la vis sans fin (9) alimente le déchet solide avec un rapport de compression d'environ 1:200 et elle est préchauffée à une température adéquate, selon le type de déchet, pour permettre la formation d'un bouchon servant à éviter des fuites de syngas mais aussi des infiltrations d'oxygène dans la chambre de pyrolyse (2).

8. Système de pyrolyse, selon la revendication 1, **caractérisé en ce que** la seconde section (200), apte à séparer la fraction la plus légère de ces cendres, telle que le charbon pulvérisé ou le noir de carbone, du syngas, comprend une chambre de tranquillisation (12) qui rassemble le gaz de synthèse sortant de la chambre de pyrolyse (2), ayant prévu au moins une tubulure (15, 16) apte à acheminer ce gaz de synthèse au moins vers un cyclone (17, 18) à l'intérieur duquel le syngas est traité pour être séparé du charbon pulvérisé ou du noir de carbone qu'il transporte, ces éléments sont évacués à travers une ouverture inférieure (17a, 18a) du cyclone (17, 18), tandis que le syngas épuré sort par la partie supérieure (17b, 18b).

9. Système de pyrolyse, selon la revendication 1, **caractérisé en ce que** la troisième section (300), apte à effectuer la distillation fractionnée du syngas, comprend une colonne (19) où sont prévus :
• des tubulures (20) et (21) positionnées au bas de la colonne (19) à travers lesquelles passe le syngas provenant des cyclones séparateurs (17)et(18);
• une sortie (22) positionnée en haut de la colonne (19) d'où sort le gaz de synthèse qui a été séparé du résidu bitumineux ; ce gaz de synthèse est acheminé vers une soufflante qui crée une légère dépression dans la chambre de pyrolyse et envoie le gaz de synthèse vers les colonnes de lavage ;
• une sortie (23), positionnée au bas de la colonne (19) d'où sort le résidu bitumineux.

10. Système de pyrolyse, selon la revendication 9, **caractérisé en ce que** la colonne de distillation fractionnée (19) comprend aussi une tubulure (24), qui entre dans la partie haute de la colonne (19) où passe l'eau de refroidissement ; cette eau traverse un serpentin (26) et sort d'une tubulure (27) sous forme de vapeur surchauffée.

11. Système de pyrolyse, selon la revendication 1, **caractérisé en ce que** la quatrième section (400), apte à effectuer le recyclage du résidu bitumineux de la distillation fractionnée, comprend :
• un turbo-mixeur (29) actionné par un troisième groupe motoréducteur (30) où l'on introduit le résidu bitumineux ;
• une tubulure (32) à travers laquelle le noir de carbone provenant des cyclones (17) et (18) est introduit dans le turbo-mixeur (29) ;
• une tubulure (34) à travers laquelle les déchets liquides, tels que les huiles végétales et les graisses usées, sont introduits dans le turbo-mixeur (29) :
dans le turbo-mixeur (29), il se produit une émulsion qui est introduite dans la chambre de pyrolyse (2).

12. Système de pyrolyse, selon la revendication 11, **caractérisé en ce que** la quatrième section (400), apte à effectuer le recyclage du résidu bitumineux de la distillation fractionnée, comprend en outre une tubulure (40) à travers laquelle la vapeur surchauffée - provenant de la colonne de distillation fractionnée (19) à travers la tubulure (27) - est introduite dans la chambre de pyrolyse (2).

13. Méthode pour le traitement de déchets solides et liquides, **caractérisée en ce qu'**elle est réalisée à travers un système, selon l'une des revendications précédentes ; la méthode prévoit le traitement de pyrolyse, de déchets solides et liquides, d'où l'on obtient un gaz de synthèse et un résidu inerte ; elle comprend les phases de distillation fractionnée des produits de la pyrolyse et de lancement d'un nouveau cycle de pyrolyse pour les résidus bitumineux produits par la distillation fractionnée ; les déchets solides qui comprennent des matières plastiques et des biomasses, sont chargés directement dans la chambre de pyrolyse (2) où ils subissent le traitement de pyrolyse ; les déchets liquides constitués d'huiles et de graisses usées sont introduits dans la chambre de pyrolyse (2) après avoir été mélangés aux résidus bitumeux produits par la distillation fractionnée des produits de la pyrolyse.
